# EUROPÄISCHE PATENTSCHRIFT

(11) **EP 1 243 353 B1**
(45) Veröffentlichungstag und Bekanntmachung des Hinweises auf die Patenterteilung: **24.11.2004**
(21) Anmeldenummer: 02005986.1
(22) Anmeldetag: 15.03.2002
(51) Int. Cl.: B21D 26/02, B29C 45/67

(54) **Schliesseinheit für durch aufgehende Kräfte zusammenzupressende Werkzeuge**
Clamping device for tools opened by opening forces
Dispositif de fermeture pour des outils ouverts par des forces d'ouverture

(30) Priorität: 19.03.2001 DE 10113224
(43) Veröffentlichungstag der Anmeldung: 25.09.2002
(73) Patentinhaber: AP&T Schäfer Technologie GmbH, 57234 Wilnsdorf (DE)
(72) Erfinder: Schäfer, August Wilhelm, 57234 Wilnsdorf (DE)
(74) Vertreter: Laufhütte, Dieter, Dr.-Ing.

(56) Entgegenhaltungen:
- WO-A-01/21378
- DE-A- 19 834 471
- FR-A- 1 543 113
- FR-A- 2 191 982
- GB-A- 1 393 534
- JP-A- 54 093 053

## Beschreibung

Die Erfindung betrifft eine Schließeinheit für gegen aufgehende Kräfte zusammenzupressende Werkzeuge mit zwei gegeneinander verschieblichen Werkzeugträger platten.

Derartige Schließeinheiten finden Anwendung in dem Bereich der Umformtechnik, in welcher das geteilte Werkzeug gegen aufgehende Kräfte zugehalten werden muß. Derartige das geschlossene Werkzeug beaufschlagende aufgehende Kräfte entstehen beispielsweise bei dem Kunststoffspritzen oder dem Innenhochdruckumformen von Rohren zu Hohlkörpern in eine gewünschte Form.

Aus der nicht vorveröffentlichten WO-A 01/21378 ist eine Spritzgußvorrichtung bekannt, wie sie beim Kunststoffspritzen verwendet wird. Um hier Paletten mit einer Größe von 1400 x 1400 mm herzustellen sind Schließkräfte von ca. 30.000 kN notwendig. Um diese Kräfte leichter aufnehmen zu können, ist hier bereits eine Schließeinheit für gegen aufgehende Kräfte zusammenzupressende Werkzeuge mit zwei gegeneinander verschieblichen Werkzeugträgerplatten bekannt, bei dem U-förmige Spannbacken bei der Bewegung zur Werkzeugträgerplatte hin beim seitlichen Übergreifen der Werkzeugträgerplatten auf schräg verlaufende Keile zum Aufbau einer Vorspannung auffahrbar sind.

Aus der DE 1983447A1 ist eine Vorrichtung zur Durchführung einer Hydroformbearbeitung bekannt die JP-A-54093053, die FR-A-1543113, die GB-A-1393534 und die FR-A-2191982 zeigen Formwerkzeuge, bei denen die Werkzeuge und die Werkzeugträgerplatten jeweils als Einheit ausgebildet sind.

Üblicherweise bestehen die Schließeinheiten aus Pressen, die insbesondere beim Innenhochdruckumformen sehr große Schließkräfte aufweisen müssen. So sind beispielsweise bei der Fertigung in der Automobiltechnik für langbauende Hohlkörper, die über Innenhochdruckumformung hergestellt werden, Pressen im Einsatz, die eine Schließkraft bis zu 16.000 Tonnen aufweisen. Derartige Pressen können eine Gesamthöhe bis zu 14 Meter haben. Zusätzlich sind sie in Anschaffung und Wartung sehr teuer.

Aufgabe der Erfindung ist es, eine gattungsgemäße Schließeinheit für gegen aufgehende Kräfte zusammenzupressende Werkzeuge zu schaffen, die einfach aufgebaut ist und insgesamt klein baut.

Erfindungsgemäß wird diese Aufgabe durch eine gattungsgemäße Schließeinheit mit den Merkmalen des Anspruchs 1 gelöst. Demgemäß weist eine Schließeinheit für gegen aufgehende Kräfte zusammenzupressende Werkzeuge mit zwei gegeneinander verschieblichen Werkzeugträgerplatten zwei die Werkzeugträgerplatten in geschlossener Stellung jeweils seitlich übergreifende Spannbacken auf.

Die Spannbacken sind U-förmig ausgebildet, wobei die Schenkel bei der Bewegung zur Werkzeugträgerplatte hin und beim seitlichen Übergreifen der Werkzeugträgerplatten auf schräg verlaufende Keile auffahrbar sind. Hier kann durch entsprechend seitliches Verschieben durch vergleichsweise kleindimensionierte Kolbenzylinderanordnungen die notwendige Vorspannung, mit welcher die Werkzeugteile über die diese tragenden Werkzeugträgerplatten zusammengedrückt sind, aufgebracht werden. Zum Aufbringen der entsprechenden Schließkraft ist bzw. sind zwischen der Werkzeugträgerplatte und dem in der Werkzeugträgerplatte festgespannten Teil des Werkzeuges eine oder zwei mit Hydraulikflüssigkeit beaufschlagbare Vorspannmembrane (n) angeordnet sein, wobei innerhalb der Werkzeugträgerplatte Zuführöffnungen für die hydraulische Flüssigkeit vorgesehen sind, so daß durch Einpressen von hydraulischer Flüssigkeit sich die Membrane in Richtung zum eingespannten Werkstückteil verformt und so zusätzlich den aufgehenden Kräften im Werkzeug entgegenwirkt.

Mit der vorliegenden Erfindung wird folgendes Konzept verfolgt. Während bislang Schließeinheiten zum Zusammenpressen der Werkzeuge gegen aufgehende Kräfte regelmäßig durch Pressen mit sehr hohen Schließkräften verwirklicht wurden, nützt die erfindungsgemäße Schließeinheit die Grundidee, daß die Kräfte grundsätzlich von starren Spannbacken aufgebracht werden, die unter Aufbau einer Vorspannung über Haltebereiche der Werkzeugträgerplatten in geschlossener Stellung, also in der Stellung, in welcher die Werkzeuge zusammengehalten werden müssen, geschoben werden. Da die hohen Presskräfte nicht mehr aufgebracht werden müssen, kann die Baugröße der Schließeinheit und damit natürlich auch das gesamte Investitionsvolumen für die Anschaffung einer entsprechenden Schließeinheit drastisch reduziert werden.

Vorteilhafte Ausgestaltungen der Erfindung ergeben sich aus den sich an den Hauptanspruch anschließenden Unteransprüchen.

Besonders vorteilhaft läßt sich die Schließeinheit modular aufbauen. D.h., daß diese aus gleich aufgebauten miteinander verbindbaren Modulen besteht, wobei ein Modul jeweils aus einer Grundplatte, zwei mittels Kolbenzylinderanordnungen gegeneinander verschieblichen Werkzeugträgerplatten und jeweils zwei mittels Kolbenzylinderanordnungen gegenüber den Werkzeugträgerplatten verschieblichen Spannbacken besteht. Der modulare Aufbau ermöglicht es, die Schließkraft der Einheit genau auf den Anwendungsfall abzustimmen. So kann ein entsprechendes Modul der Schließeinheit eine Vorspannkraft von mehr als 2.000 Tonnen pro laufenden Meter aufweisen. Je nach der Länge des herzustellenden Bauteils können dann entsprechend viele Module aneinander gekoppelt werden. Dies hat einen erheblichen Vorteil gegenüber den als Pressen ausgestalteten Schüeßeinheiten, da diese grundsätzlich nach den längsten aufzunehmenden Werkstücken auszulegen sind, und damit für viele Anwendungsfälle überdimensioniert sein können. Dem gegenüber kann die erfindungsgemäße Schließeinheit bei modularem Aufbau immer an den Anwendungsfall angepasst werden.

Die an den Werkzeugträgerplatten angeordneten Keile können aus einem gesonderten auswechselbaren Bauteil aus abriebsfestem Werkstoff bestehen. Es handelt sich hier um Verschleißteile, die demzufolge einfach auswechselbar sind.

Gleichzeitig kann die Auflauffläche innerhalb der Schenkel der Spannbacken ebenfalls aus austauschbaren Teile aus abriebsfestem Werkstoff bestehen, wobei die spannbackenseitigen Auflaufflächen aus im Querschnitt näherungsweise halbkreisförmigen Leisten gefertigt sind, wobei diese halbkreisförmigen Leisten in entsprechend halbkreisförmigen Nuten innerhalb der Spannbacken gelagert sind.

Gemäß einer bevorzugten Ausführungsform kann eine untere Werkzeugträgerplatte fest auf der Grundplatte befestigt sein, während eine obere Werkzeugträgerplatte über vier symmetrisch angeordnete Kolbenzylinderanordnungen verfahrbar ist, wobei die Kolbenzylinderanordnungen einerseits ebenfalls an der Grundplatte und andererseits an entsprechenden Traversen, in welchen die obere Werkzeugträgerplatte aufgenommen ist, befestigt sind. Über die vier symmetrisch angeordneten Kolbenzylinderanordnungen ist die obere Werkzeugträgerplatte gegenüber der unteren Werkzeugträgerplatte senkrecht verfahrbar.

Die Spannbacken können gemäß einer Ausführungsvariante über Lager auf der Grundplatte verschieblich geführt sein, wobei diese einerseits über an der unteren Werkzeugträgerplatte angeschlossenen Kolbenzylinderanordnungen und andererseits über in die obere Werkzeugträgerplatte beim Absenken derselben einkoppelbare Kolbenzylinderanordnungen gegenüber den Werkzeugträgerplatten bewegbar sind.

Alternativ dazu können in einer anderen Ausführungsvariante die Spannbacken über mindestens eine Kolbenzylindereinheit, die in einem auf der Grundplatte angeordneten Lagerbock gelagert sind, gegenüber den Werkzeugträgerplatten verschieblich sein.

Weitere Einzelheiten und Vorteile der Erfindung werden anhand eines in der Zeichnung dargestellten Ausführungsbeispieles näher erläutert. Es zeigen:
- Fig. 1:: eine teilweise geschnittene Draufsicht auf eine Schließeinheit gemäß einer Ausführungsform der vorliegenden Erfindung,
- Fig. 2:: eine Seitenansicht der Schließeinheit gemäß Figur 1,
- Fig. 3:: ein teilweise geschnittenes Detail aus der Figur 1,
- Fig. 4:: ein zweites teilweise geschnittenes Detail aus der Figur 1 und
- Fig. 5:: ein drittes teilweise geschnittenes Detail aus der Figur 1.

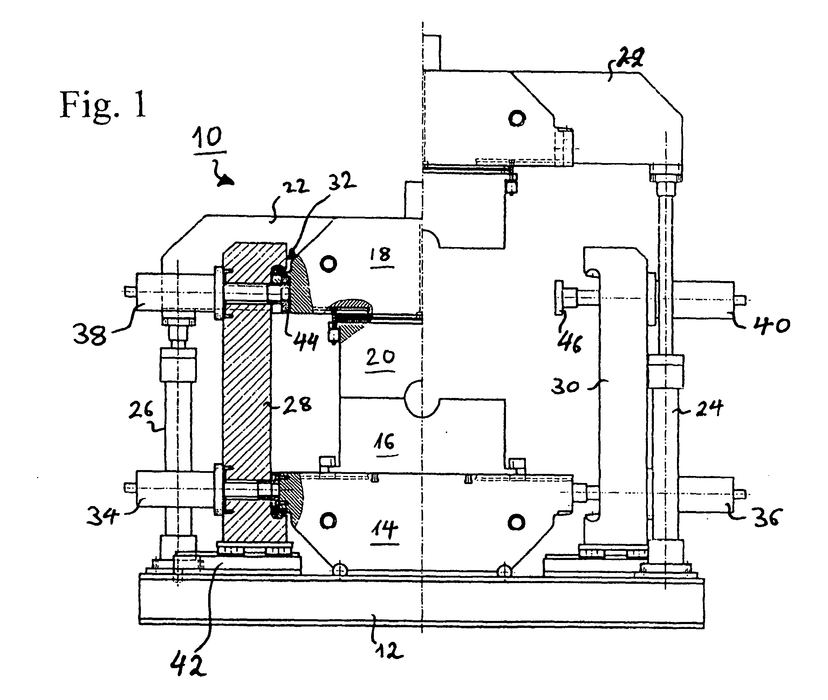

In der Figur 1 ist eine Schließeinheit 10 in der linken Hälfte in geschlossener Stellung und in der rechten Hälfte in geöffneter Stellung dargestellt. Die Schließeinheit 10 umfasst eine auf einer Grundplatte 12 ortsfest aufgelagerte Werkzeugträgerplatte 14 mit einer eingespannten Werkzeughälfte 16 sowie eine gegenüber der ortsfesten Werkzeugträgerplatte 14 verschieblichen Werkzeugträgerplatte 18 mit einer aufgenommenen Werkzeughälfte 20. Die Werkzeugträgerplatte 18 ist in Traversen 22 gehalten, die wiederum über Kolbenzylinderanordnungen 24, 26 in Richtung auf die untere Werkzeugträgerplatte 14 bewegbar sind. Die Kolbenzylinderanordnungen 24 und 26 sind einerseits mit der Grundplatte 12 und andererseits jeweils mit den Traversen 22 verbunden.

Die Schließeinheit 10 weist weiterhin seitlich verfahrbare Spannbacken 28, 30 auf, die im wesentlichen U-förmig ausgestaltet sind und deren Schenkel über stufenartig ausgebildete Haltebereiche 32 an den Werkzeugträgerplatten verschiebbar sind. Die Spannbacken 28 bzw. 30 sind über Kolbenzylinderanordnungen 34, 36 bzw. 38, 40 gegenüber den Werkzeugträgerplatten 14, 18 verschieblich. Wie in der Figur 1 dargestellt, sind die Kolben 34 bzw. 36 seitlich mit der Werkzeugträgerplatte 14 verschraubt, während die Zylinder ihrerseits mit den Spannbacken verschraubt sind. Die Kolben treten durch eine entsprechende Bohrung durch die Spannbacken hindurch. Auf einer Seite sind die Spannbacken 28 bzw. 24 auf einem Gleitlager 42, welches auf der Grundplatte 12 montiert ist, gleitend gelagert.

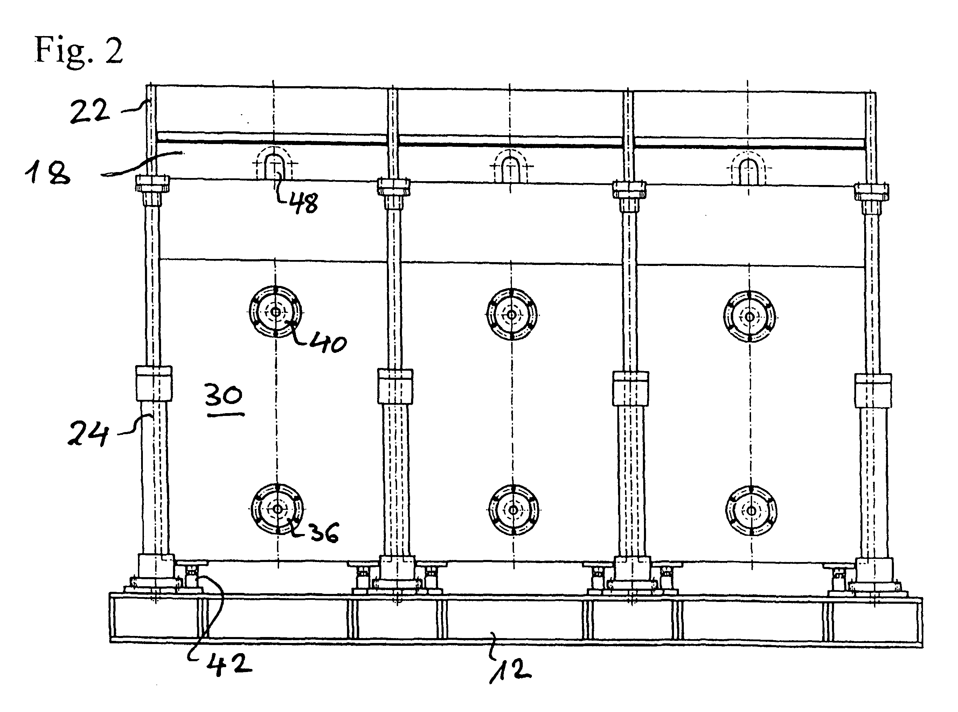

Die Kolbenzylinderanordnungen 38 und 40 sind parallel zu den Kolbenzylinderanordnungen 34 und 36 angeordnet. Hier sind die Kolben jeweils mit den Spannbacken 28 bzw. 30 verbunden. Die Zylinder dagegen weisen einen Abschlußflansch 44 bzw. 46 auf, der in einen entsprechenden Schlitz 48 innerhalb der Werkzeugträgerplatte (vgl. Figur 2) einfahrbar ist. Der Flansch 44 bzw. 46 taucht, wie im linken Teil der Figur 1 dargestellt, beim Absenken der Werkzeugträgerplatte 18 in die entsprechende Ausnehmung hinter dem Langloch 48 ein und führt zu einem Ankoppeln der Kolbenzylinderanordnung an der Werkzeugträgerplatte 18. Somit können in geschlossener Stellung der Schließeinheit 10 die Spannbacken 28 bzw. 30 durch Betätigen der Kolbenzylinderanordnungen 34, 36, 38 und 40 über die Haltebereiche 32 geschoben werden.

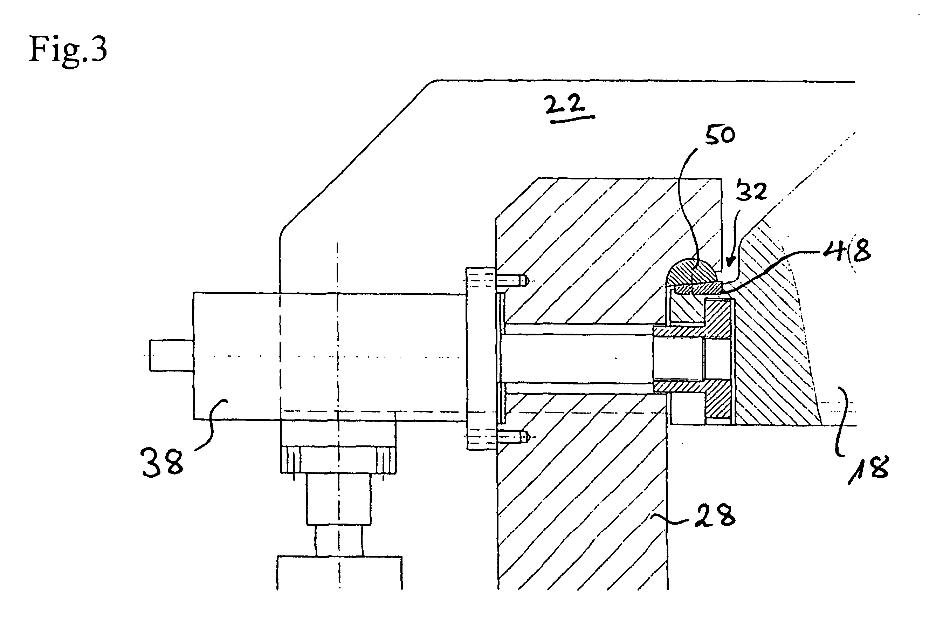

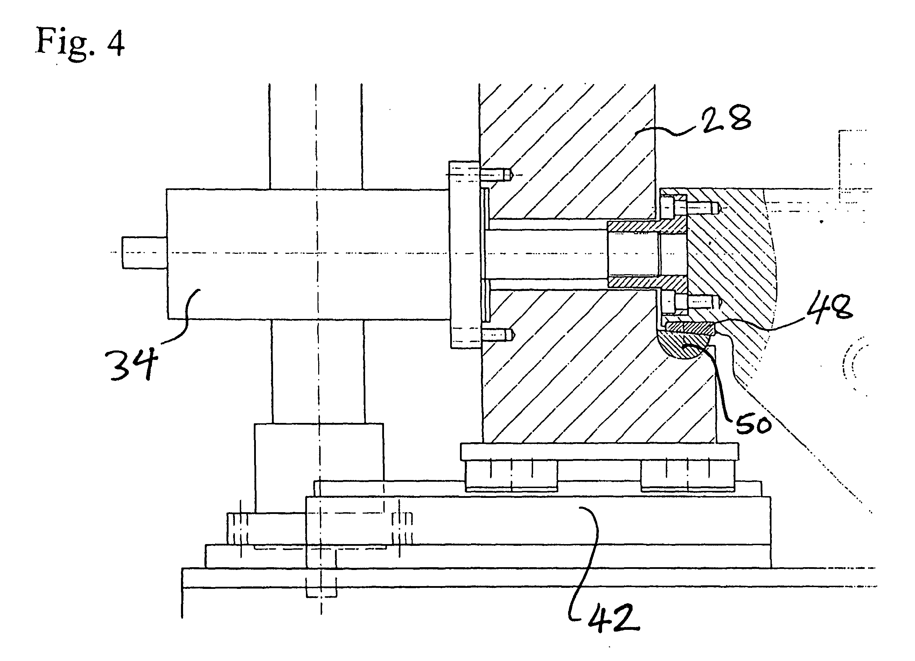

Insbesondere in Figur 3 ist im Detailschnitt dargestellt, daß beim Aufschieben der Spannbacken, hier der Spannbacke 28, die freien Schenkel auf eine keilförmige Fläche auflaufen. Die keilförmige Fläche ist im Haltebereich 32 der Werkzeugträgerplatte 18 durch einen eingelegten Keil 48 aus einem abriebsfesten Material gebildet, während die gegenüberliegende Gleitfläche innerhalb der Spannbacke 28 ebenfalls mittels einer Leiste 50 gebildet ist, die aus abriebsfestem Werkstoff besteht, wobei die Leiste 50 im Querschnitt halbkreisförmig ausgebildet ist und in einer entsprechenden halbkreisförmigen Ausnehmung der Spannbacke 28 gelagert ist. Somit kann sich die Auflauffläche der Leiste 50 an die Steigung des Auflaufkeils 48 anpassen. Durch Aufschieben der übergreifenden Spannbacken wird über die geschlossenen Werkzeugträgerplatten eine hohe Vorspannung auf die Werkzeughälften 16 und 20 ausgeübt. In Figur 4 ist im Schnitt der untere Teil der Spannbacke 28 auf die Werkzeugträgerplatte 14 aufgeschoben, wobei auch hier entsprechende Keile 48 bzw. Leisten 50 vorgesehen sind.

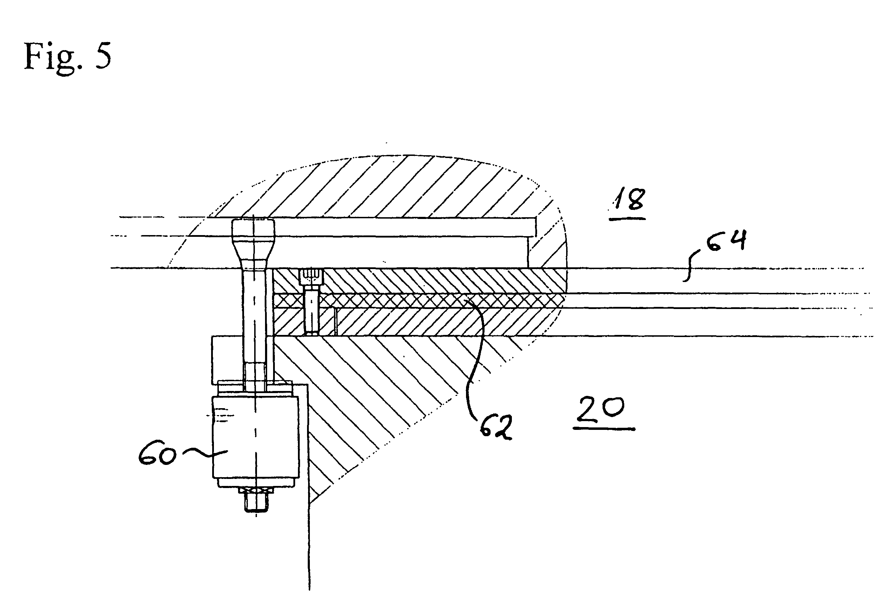

In Figur 5 ist ein Detail des Übergangs zwischen der Werkzeugträgerplatte 18 und der Werkzeughälfte 20 teilweise geschnitten dargestellt, wobei dieser geschnittene Bereich demjenigen gemäß Figur 1 entspricht, jedoch in der Figur 5 vergrößert dargestellt ist. Zunächst ist seitlich ein Spannelement 60 gezeigt, über welches die Werkzeughälfte 20 in der Werkzeugträgerplatte 18 einspannbar ist. Von besonderer Bedeutung ist hier allerdings eine zwischen der Werkzeugträgerplatte 18 und der Werkzeughälfte 20 angeordnete Gummischicht 62, die eine Vorspannmembrane bildet. In hier nicht näher dargestellter Art und Weise sind in der Werkzeugträgerplatte 18 Öffnungen vorgesehen, über die Hydraulikflüssigkeit zwischen die Vorspannmembrane 62 und eine Auflageplatte 64 derart pumpbar ist, daß die eingepresste hydraulische Flüssigkeit die Membrane in Richtung zu der eingespannten Werkstückhälfte 20 beaufschlagt, so daß auf die Werkstückhälfte zusätzlich eine der aufgehenden Kraft im Werkzeug entgegenwirkende Kraft aufgeprägt wird.

Die im hier diskutierten Beispiel dargestellte Ausführungseinheit ist auf mehreren miteinander verbundenen Modulen aufgebaut. Wie sich aus der Darstellung gemäß Figur 2 ergibt, sind hier drei symmetrisch zueinander aufgebaute Module auf einer Grundplatte 12 nebeneinander aufgebaut. Aufgrund der modularen Bauweise läßt sich entsprechend der Länge das Werkzeug 16, 20 anpassen.

## Patentansprüche

1. Schließeinheit (10) für gegen aufgehende Kräfte zusammenzupressende Werkzeuge (16, 20) mit zwei gegeneinander verschieblichen Werkzeugträgerplatten (14, 18) mit zwei die Werkzeugträgerplatten (14, 18) in geschlossener Stellung jeweils seitlich übergreifende Spannbacken (28, 30), die U-förmig ausgebildet sind, wobei die Schenkel bei der Bewegung zur Werkzeugträgerplatte (14, 18) hin und beim seitlichen Übergreifen der Werkzeugträgerplatten (14, 18) auf schräg verlaufende Keile (48) auffahrbar sind, wobei zwischen der Werkzeugträgerplatte (18) und dem in der Werkzeugträgerplatte festgespannten Teil (20) des Werkzeuges mindestens eine mit Hydraulikflüssigkeit beaufschlagbare Vorspannmembran (62) angeordnet ist, wobei innerhalb der Werkzeugträgerplatte Zufuhröffnungen für die hydraulische Flüssigkeit vorgesehen sind, so dass durch Einpressen von hydraulischer Flüssigkeit sich die Membran (62) in Richtung zum eingespannten Werkstückteil (20) verformt und so zusätzlich den aufgehenden Kräften im Werkzeug entgegenwirkt.

2. Schließeinheit nach Anspruch 1, **dadurch gekennzeichnet, daß** die seitlich an den Werkzeugträgerplatten angeordneten Keile (42) aus einem gesonderten auswechselbaren Bauteil aus abriebsfestem Werkstoff bestehen.

3. Schließeinheit nach einem der Ansprüche 1 oder 2, **dadurch gekennzeichnet, daß** die Auflauffläche innerhalb der Schenkel der Spannbacken (28, 30) aus im Querschnitt näherungsweise halbkreisförmigen Leisten (50) aus abriebsfestem Werkstoff besteht.

4. Schließeinheit nach einem der Ansprüche 1 bis 3, **dadurch gekennzeichnet, daß** eine untere Werkzeugträgerplatte (14) fest auf der Grundplatte (12) befestigt ist und daß eine obere Werkzeugträgerplatte (18) über vier symmetrisch angeordnete Kolbenzylinderanordnungen (24, 26) senkrecht zu der fest angeordneten Werkzeugträgerplatte (14) verfahrbar ist.

5. Schließeinheit nach einem der vorangehenden Ansprüche, **dadurch gekennzeichnet, daß** die Spannbacken (28, 30) über Lager auf der Grundplatte (12) verschieblich geführt sind, wobei diese einerseits über an der unteren Werkzeugträgerplatte (14) angeschlossene Kolbenzylinderanordnungen (34, 36) und andererseits über in die obere Werkzeugträgerplatte (18) beim Absenken derselben einkoppelbare Kolbenzylinderanordnungen (38, 40) gegenüber den Werkzeugträgerplatten (18) bewegbar sind.

6. Schließeinheit nach einem der vorangehenden Ansprüche, **dadurch gekennzeichnet, daß** die Spannbacken (28, 30) über mindestens eine Kolbenzylindereinheit (34, 36), die in einem auf der Grundplatte (12) angeordneten Lagerbock (42) gelagert ist, gegenüber den Werkzeugträgerplatten (14, 18) verschieblich ist.

7. Schließeinheit nach einem der vorangehenden Ansprüche, **dadurch gekennzeichnet, daß** sie aus gleich aufgebauten miteinander verbindbaren Modulen besteht, bei denen ein Modul jeweils aus einer Grundplatte (12, 2) mittels Kolbenzylinderanordnungen (24, 26) gegeneinander verschieblichen Werkzeugträgerplatten (28, 30) und jeweils zwei mittels Kolbenzylinderanordnungen (34, 36, 38, 40) gegenüber den Werkzeugträgerplatten (14, 18) verschieblichen Spannbacken (28, 30) besteht.

## Claims

1. Closing unit (10) for tools (16, 20) to be pressed together against opening forces, comprising two tool carrier plates (14, 18) which can be displaced towards one another and comprising two clamping jaws (28, 30) which overlap the tool carrier plates (14, 18) in the closed position in each case laterally and which are of U-shaped design, it being possible for the legs to run onto sloping wedges (48) during the movement towards the tool carrier plate (14, 18) and during the lateral overlapping of the tool carrier plates (14, 18), at least one prestressing diaphragm (62) to which hydraulic fluid can be admitted being arranged between the tool carrier plate (18) and that part (20) of the tool which is clamped in position in the tool carrier plate, feed openings for the hydraulic fluid being provided inside the tool carrier plate, so that, by injection of hydraulic fluid, the diaphragm (62) is deformed in the direction of the tool part (20) clamped in place and thus additionally counteracts the opening forces in the tool.

2. Closing unit according to Claim 1, **characterized in that** the wedges (42) arranged laterally on the tool carrier plates consist of a separate interchangeable component of wear-resistant material.

3. Closing unit according to either of Claims 1 or 2, **characterized in that** the run-up surface within the legs of the clamping jaws (28, 30) consist of strips (50) which are approximately semicircular in cross section and are made of a wear-resistant material.

4. Closing unit according to one of Claims 1 to 3, **characterized in that** a bottom tool carrier plate (14) is firmly fastened to the base plate (12), and **in that** a top tool carrier plate (18) is movable perpendicularly to the firmly arranged tool carrier plate (14) via four symmetrically arranged piston/cylinder arrangements (24, 26).

5. Closing unit according to one of the preceding claims, **characterized in that** the clamping jaws (28, 30) are displaceably guided on the base plate (12) via bearings, these clamping jaws (28, 30) being movable relative to the tool carrier plates (14, 18) on the one hand via piston/cylinder arrangements (34, 36) attached to the bottom tool carrier plate (14) and on the other hand via piston/cylinder arrangements (38, 40) which can be engaged in the top tool carrier plate (18) during the lowering of the same.

6. Closing unit according to one of the preceding claims, **characterized in that** the clamping jaws (28, 30) are displaceable relative to the tool carrier plates (14, 18) via at least one piston/cylinder unit (34, 36) which is mounted in a bearing block (42) arranged on the base plate (12).

7. Closing unit according to one of the preceding claims, **characterized in that** it consists of modules which are of identical construction and can be connected to one another and in which one module in each case consists of a base plate (12), two tool carrier plates (28, 30) displaceable towards one another by means of piston/cylinder arrangements (24, 26) and in each case two clamping jaws (28, 30) displaceable relative to the tool carrier plates (14, 18) by means of piston/cylinder arrangements (34, 36, 38, 40).

## Revendications

1. Unité de fermeture (10) pour des outils (16, 20) à comprimer contre des forces d'ouverture, avec deux plaques de porte-outil (14, 18) déplaçables l'une contre l'autre avec deux mâchoires (28, 30) passant respectivement latéralement sur les plaques porte-outil (14, 18) dans la position fermée, qui sont réalisées en forme de U, où les branches, lors du déplacement vers la plaque porte-outil (14, 18) et lors du passage latéral sur les plaques porte-outil (14, 18) peuvent être montées sur des coins (48) s'étendant en biais, où est disposée entre la plaque porte-outil (18) et la partie (20) de l'outil serré dans la plaque porte-outil au moins une membrane de précontrainte (62) pouvant être chargée en liquide hydraulique, où sont prévus à l'intérieur de la plaque porte-outil des ouvertures d'amenée du liquide hydraulique de sorte que par l'introduction par pression de liquide hydraulique, la membrane (62) se déforme en direction de la partie de pièce serrée (20) et s'oppose ainsi additionnellement aux forces d'ouverture dans l'outil.

2. Unité de fermeture selon la revendication 1, **caractérisée en ce que** les coins (42) disposés latéralement aux plaques porte-outil sont constitués d'un composant échangeable séparé en un matériau résistant à l'usure.

3. Unité de fermeture selon l'une des revendications 1 ou 2, **caractérisée en ce que** la face de montée à l'intérieur des branches des mâchoires de serrage (28, 30) est constituée de baguettes (50) en section transversale approximativement en forme de demi-cercle en matériau résistant à l'usure.

4. Unité de fermeture selon l'une des revendications 1 à 3, **caractérisée en ce qu'**une plaque porte-outil inférieure (14) est fixée solidement sur la plaque de base (12), et **en ce qu'**une plaque porte-outil supérieure (18) est déplaçable par quatre agencements à piston et à vérin (24, 26) disposés de manière symétrique perpendiculairement à la plaque porte-outil disposée fixement.

5. Unité de fermeture selon l'une des revendications précédentes, **caractérisée en ce que** les mâchoires de serrage (28, 30) sont guidées d'une manière déplaçable par des paliers sur la plaque de base (12), où celles-ci sont déplaçables, d'une part, par des agencements à piston et à vérin (34, 36) reliés à la plaque porte-outil inférieure (14) et, d'autre part, par des agencements à piston et à vérin (38, 40) pouvant être couplés à la plaque porte-outil supérieure (18) lors de l'abaissement de celle-ci, par rapport aux plaques porte-outil (18).

6. Unité de fermeture selon l'une des revendications précédentes, **caractérisée en ce que** les mâchoires de serrage (28, 30) sont déplaçables par au moins une unité à piston et à vérin (34, 36), qui est logée sur un palier (42) disposé sur la plaque de base (12), par rapport aux plaques porte-outil (14, 18).

7. Unité de fermeture selon l'une des revendications précédentes, **caractérisée en ce qu'**elle est constituée de modules de même construction, pouvant être liés les uns aux autres, dans lesquels un module est constitué respectivement de plaques porte-outil (28, 30) déplaçables l'une contre l'autre sur une plaque de base (12, 2) au moyen d'agencements à piston et à vérin (24, 26) et respectivement de deux mâchoires de serrage (28, 30) déplaçables au moyen d'agencements à piston et à vérin (34, 36, 38, 40) par rapport aux plaques porte-outil (14, 18).
